# EUROPEAN PATENT APPLICATION

(11) **EP 1 647 563 A2**
(43) Date of publication of application: **19.04.2006**
(21) Application number: 05021574.8
(22) Date of filing: 01.10.2005
(51) Int. Cl.: C08G 18/28, C08G 18/08, C14C 3/20

(54) **Tanning agents based on isocyanates**

(30) Priority: 15.10.2004 DE 102004050284
(71) Applicant: LANXESS Deutschland GmbH, 51369 Leverkusen (DE)
(72) Inventor: Ebbinghaus, Michael, 51371 Leverkusen (DE); Heinzelmann, Franz, 51375 Leverkusen (DE); Kleban, Martin, Dr., 51381 Leverkusen (DE); Reiners, Juergen, Dr., 51373 Leverkusen (DE)

(57) **Zusammenfassung**

Wässrige Zusammensetzung enthaltend
a) wenigstens eine Carbamoylsulfonatgruppen-haltige Verbindung und
b) wenigstens ein Alkoholalkoxylat.

## Description

Die Erfindung betrifft wässrige Zusammensetzungen enthaltend wenigstens eine Carbamoylsulfonatgruppen-haltige Verbindung und wenigstens ein Alkoholalkoxylat, Verfahren zu deren Herstellung sowie ihre Verwendung als Gerbstoff oder Vorgerbstoff.

Isocyanate und ihre Verwendung als Gerbstoffe sind prinzipiell bekannt und beschrieben z.B. in US-A 2 923 594 *"method of tanning",* US-A 4 413 997 *"dicarbamoylsulfonat tanning agent"* oder H. Träubel, Gerbungen im *Isocyanaten,* 1. und 2. Teil, Das Leder, 1977, Seiten 150 ff und 181 ff.

Dabei hat sich gezeigt, dass nur Isocyanate mit relativ niedrigem Molekulargewicht in der Lage sind, die Kollagenmoleküle effektiv zu vernetzten und damit die Schrumpftemperatur des Leders zu erhöhen.

Diese Verbindung können aber wegen ihrer toxikologischen Eigenschaften, dem hohen Dampfdruck und der geringen Wasserlöslichkeit nicht in handelsüblichen Gerbereimaschinen eingesetzt werden. Darüber hinaus reagieren Isocyanate in wässriger Lösung schnell über die Zwischenstufen Carbamoylsäure und Amin zu einem polymeren Harnstoff, der keinerlei gerbende Wirkung aufweist. Daher ist eine temporäre Blockierung der Isocyanat-Funktionalität mit einer Schutzgruppe ratsam.

Die EP-A 0 690 135 und EP-A 0 814 168 beschreiben modifizierte Isocyanate, mit denen diese Probleme eingeschränkt werden können. Hierzu werden ausgewählte Isocyanate zuerst mit einem Polyetheralkohol umgesetzt, und anschließend mit Bisulfit zur Cärbamoylverbindung umgewandelt, die gegenüber der Reaktion mit Wasser weitgehend inert ist. Man erhält eine wässrige Dispersion mit einer für den Einsatz im Gerbprozess ausreichenden Stabilität. Dieser Prozess hat jedoch zwei schwerwiegende Nachteile:
- Die Umsetzung von Isocyanat mit Polyetheralkohol muss unter Ausschluss von Wasser und bevorzugt ohne viskositätserniedrigendes Lösungsmittel durchgeführt werden und erfordert daher technisch hochwertige und teure Hardware.
- Durch die Kupplung des Alkohols an das Isocyanat wird ein Teil der Isocyanat-Funktionen verbraucht und somit die Gerbwirkung des Produktes reduziert.

Es wurden nun Isocyanat-basierte Produkte gefunden die diese Nachteile nicht aufweisen.

Die Erfindung betrifft daher eine wässrige Zusammensetzung, enthaltend
a) wenigstens eine Carbamoylsulfonatgruppen-haltige Verbindung und
b) wenigstens ein Alkoholalkoxylat.

Bevorzugt enthalten die erfindungsgemäßen Zusammensetzungen - berechnet als Natriumsalz und festkörperbezogen - 51 bis 99 , vorzugsweise 61 bis 97 Gew.-% Carbamoylsulfonatgruppen-haltige Verbindungen. Als Carbamoylsulfonatgruppen-haltige Verbindungen der Komponente a) kommen vorzugsweise Umsetzungsprodukte aus organischen Isocyanaten und Bisulfiten und/oder Disulfiten in Frage.

Als organische Polyisocyanate kommen aliphatische, cycloaliphatische, araliphatische, aromatische oder heterocyclische Polyisocyanate in Betracht, wie sie z.B. von W. Siefken in Liebigs Annalen der Chemie 562, Seiten 75 bis 136 beschrieben werden.

Bevorzugt ist das organische Isocyanat mit einer Funktionalität von 1,8 bis 3,5 und vorzugsweise ein Molgewicht von < 800 g/mol besitzt, insbesondere ein Isocyanat mit Funktionalität von 2 und einem Molgewicht < 400 g/mol ist.

Bevorzugte Polyisocyanate sind Verbindungen der Formel Q(NCO)ₙ mit einem mittleren Molekulargewicht unter 800, worin n eine Zahl von mindestens 2, vorzugsweise von 2 bis 4, Q einen aliphatischen C₄-C₁₂-Kohlenwasserstoffrest, einen cycloaliphatischen C₆-C₁₅-Kohlenwasserstoffrest oder einen heterocyclischen C₂-C₁₂-Rest mit 1 bis 3 Heteroatomen aus der Reihe Sauerstoff, Schwefel, Stickstoff bedeuten, beispielsweise (i) Diisocyanate wie Ethylendiisocyanat, 1,4-Tetramethylendiisocyanat, 1,6-Hexamethylendiisocyanat, 1,12-Dodecandiisocyanat, 2-Isocyanatomethyl-1,8-octamethylendiisocyanat, Cyclobutan-1,3-diisocyanat, Cychlohexan-1,3- und -1,4-diisocyanat sowie beliebige Gemische dieser Isomeren, 1-Isocyanato-2-isocyanatomethyl-cyclopentan, 1-Isocyanato-3,3,5-trimethyl-5-isocyanatomethyl-cyclohexan, 2,4- und 2,6-Hexahydrotoluylendiisocyanat sowie beliebige Gemische dieser Isomeren, Hexahydro-1,3- und/oder - 1,4-phenylendiisocyanat, Perhydro-2,4'- und/oder -4,4'-diphenylmethyl-diisocyanat, 1,3- und 1,4-Phenylen-diisocyanat, 2,4- und 2,6-Toluylendiisocyanat sowie beliebige Gemische dieser Isomeren, Diphenylmethan-2,4'- und/oder -4,4'-diisocyanat, Naphthalin-1,5-diisocyanat, Uretdiongruppen enthaltende Polyisocyanate wie z.B. das Bis(6-isocyanatohexyl)-uretdion oder das die Uretdion-Struktur enthaltende Dimere des 1-Isocyanato-3,3,5-trimethyl-5-isocyanato-methylcyclohexans und beliebige Mischungen der vorgenannten Polyisocyanate; (ii) tri- und höherfunktionelle Polyisocyanate wie die Isomeren der Trüsocyanatotriphenylmethanreihe (wie Triphenylmethan-4,4', 4'-trisocyanat) und ihre Gemische; (iii) durch Allophanatisierung, Trimerisierung oder Biuretisierung aus den Polyisocyanaten (i) und/oder (ii) hergestellte Verbindungen, die mindestens 3 Isocyanatgruppen pro Molekül aufweisen. Beispiele für durch Trimerisierung hergestellte Polyisocyanate sind das durch Isocyanurat-Bildung erhältliche Trimerisat des 1-Isocyanato-3,3,5-trimethyl-5-isocyanatomethylcyclohexans und die durch Trimerisierung von Hexamethylendiisocyanat, gegebenenfalls im Gemisch mit 2,4'-Diisocyanatotoluol, erhältlichen Isocyanuratgruppen enthaltenden Polyisocyanate. Beispiele für durch Biuretisieiung hergestellte Polyisocyanate sind Tris-(isocyanatohexyl)biuret und dessen Gemische mit seinen höheren Homologen, wie sie z.B. gemäß DE-OS 23 08 015 zugänglich sind.

Besonders bevorzugte Polyisocyanate sind solche mit einem Molekulargewicht von weniger als 400 g/mol mit an Aliphaten oder Cycloaliphaten gebundenen NCO-Gruppen, wie z.B. 1,4-Diisocyanatobutan, 1,6-Diisocyanatohexan, 1,5-Diisocyanato-2,2-dimethylpentan, 2,2,4- bzw. 2,4,4-Trimethyl-1,6-düsocyanatohexan, 1,3- und 1,4-Diisocyanatohexan, 1-Isocyanato-3,3,5-trimethyl-5-isocyanatomethyl-cyclohexan, 1-Isocyanato-1-methyl-4-isocyanatomethyl-cyclohexan und 4,4'-Diisocyanatodicyclohexyl-methan, und beliebige Gemische solcher Diisocyanate. Auch araliphatische Polyisocyanate wie die Xylylendiisocyanate der Formeln 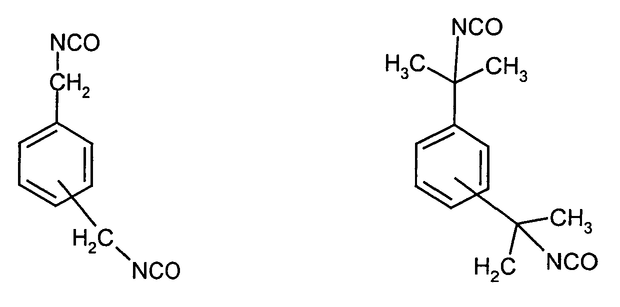 können verwendet werden.

Bevorzugt verwendet werden obige Diisocyanate. Man kann aber auch monofunktionelle aliphatische Isocyanate wie beispielsweise Butylisocyanat, Hexylisocyanat, Cyclohexylisocyanat, Stearylisocyanat oder Dodecylisocyanat und/oder Polyisocyanate mit einer durchschnittlichen Funktionalität von 2,2 bis 4,2 mitverwenden.

Bevorzugt handelt es sich bei den höherfunktionellen Polyisocyanaten um im wesentlichen aus trimerem 1,6-Diisocyanatohexan oder 1-Isocyanato-3,3,5-trimethyl-5-isocyanatomethylcyclohexan und gegebenenfalls dimerem 1,6-Diisocyanatohexan oder 1-Isocyanato-3,3,5-trimethyl-5-isocyanatomethyl-cyclohexan und den entsprechend höheren Homologen bestehenden Isocyanuratgruppen und gegebenenfalls Uretdiongruppen aufweisenden Polyisocyanatgemischen mit einem NCO-Gehalt von 19 bis 24 Gew.-%, wie sie durch an sich bekannte katalytische Trimerisierung und unter Isocyanat-Bildung von 1,6-Diisocyanatohexan oder 1-Isocyanato-3,3,5-trimethyl-5-Isocyanatomethylcyclohexan erhalten werden und die vorzugsweise eine (mittlere) NCO-Funktionalität von 3,2 bis 4,2 aufweisen.

Weitere geeignete Polyisocyanate A sind durch Modifizierung aliphatischer oder cycloaliphatischer Diisocyanate hergestellte Polyisocyanate mit Uretdion- und/oder Isocyanurat-, Urethan- und/oder Allophanat-, Biuret- oder Oxadiazinstruktur, wie sie beispielsweise in den DE-A 1 670 666, DE-A 3 700 209 und DE-A 3 900 053 und in den EP-A 336 205 und EP-A 339 396 beispielhaft beschrieben sind. Geeignete Polyisocyanate sind z.B. auch die estergruppenhaltigen Polyisocyanate, wie z.B. die durch Umsetzung von Pentaerythrit- oder Trimethylolpropansilylethern mit Isocyanatocapronsäurechlorid zugänglichen Tetrakis- bzw. Triisocyanate (vgl. DE-A 3 743 782). Außerdem ist es auch möglich, Triisocyanate wie z.B. Tris-isocyanatodicyclohexylmethan zu verwenden.

Die Verwendung von monofunktionellen und von mehr als difunktionellen Isocyanaten wird in beiden Fällen vorzugsweise auf Mengen von je maximal 10 Mol-%, bezogen auf sämtliche Polyisocyanate A, beschränkt.

Ganz besonders bevorzugt sind jedoch die oben genannten aliphatischen, cycloaliphatischen und araliphatischen Diisocyanate.

Besonders bevorzugt ist Hexamethylendiisocyanat (HDI).

Als Bisulfite und/oder Disulfite kommen vorzugsweise deren Alkali- oder Ammoniumsalze, insbesondere die Natriumsalze der schwefeligen bzw. dischwefeligen Säure, d.h. Natriumhydrogensulfit (NaHSO₃) bzw. Natriumdisulfit (Na₂S₂O₅) in Frage.

Vorteilhaft verwendet werden können auch die anderen Alkali- und Ammoniumsalze dieser Säuren, nämlich Kaliumbisulfit, Kaliumdisulfit, Lithiumbisulfit, Lithiumdisulfit, Ammoniumbisulfit, Ammoniumdisulfit sowie einfache Tetraalkylammoniumsalze dieser Säuren wie beispielsweise Tetramethylammonium-bisulfit, Tetraethylammonium-bisulfit usw. Zur Blockierung werden die Salze bevorzugt als wässrige Lösungen mit Festkörpergehalten von 5 bis 40 Gew.-% eingesetzt.

Die Umsetzung der organischen Isocyanate mit Bisulfit/Disulfit erfolgt vorzugsweise bei 0 bis 60°C, bevorzugt bei 10 bis 40°C, mit wässrigen Lösungen von Alkali- bzw. Ammoniumsulfiten in Gegenwart von Alkoholalkoxylat bis alle NCO-Gruppen reagiert haben. Dazu sind im Allgemeinen Reaktionszeiten von 1 bis 12, vorzugsweise 3 bis 8 Stunden notwendig. Die Endprodukte sind optisch klare wässrige Lösungen, in wenigen Einzelfällen stabile, feinteilige Emulsionen mit mittleren Teilchendurchmessern unter 8000 Nanometer.

Als bevorzugte Alkoholalkoxylate sind Polyetheralkohole geeignet, die in an sich bekannter Weise durch Alkoxylierung geeigneter Startermoleküle zugänglich sind. Zur Herstellung der Polyetheralkohole können beliebige ein- oder mehrwertige Alkohole des Molekulargewichts 88 bis 438 als Startermoleküle eingesetzt werden.

Besonders bevorzugt handelt es sich dabei um Alkoxylate aliphatischer Alkohole mit einer Kettenlänge von 5 bis 30 Kohlenstoffatomen und 1-25 Alkoxy-Einheiten.

Bevorzugt werden Alkoholalkoxylate eingesetzt, die durch Umsetzung mindestens eines Alkohols ROH mit n Mol mindestens eines Alkylenoxids pro Mol Alkohol ROH erhalten werden,
worin
R ein Alkylrest mit 5 bis 30 Kohlenstoffatomen ist, der eine Hauptkette mit 4 bis 29 Kohlenstoffatomen aufweist, die in der Kettenmitte mit mindestens einem C₁-C₁₀-Alkylrest verzweigt ist;
das Alkylenoxid 2 bis 6 Kohlenstoffatome aufweist
und
der n ein Wert von 1 bis 25 ist.

Unter Kettenmitte sind im Sinn der vorliegenden Erfindung diejenigen Kohlenstoffatome der Hauptkette, d.h. der längsten Alkylkette des Rests R, zu verstehen, beginnend mit dem Kohlenstoffatom C#2, wobei die Nummerierung von dem Kohlenstoffatom (C#1) ausgeht, das direkt an das dem Rest R benachbarte Sauerstoffatom gebunden ist, und endend mit dem Kohlenstoffatom ω das endständige Kohlenstoffatom der Hauptkette ist, wobei C#2 und das Kohlenstoffatom ω-2 eingeschlossen sind. Das bedeutet, dass mindestens eines der Kohlenstoffatome C#2, C#3, ... bis C_{ω-2} der Hauptkette des Rests R mit einem C₁- bis C₁₀₋Alkylrest substituiert ist. Bevorzugt ist das Kohlenstoffatom C#2 der Hauptkette des Rest R mit einem C₁- bis C₁₀-Alkylrest substituiert. Daneben ist es auch möglich, dass ein oder mehrere Kohlenstoffatome in der Kettenmitte mit zwei C₁- bis C₁₀-Alkylresten substituiert sind, d.h., dass ein oder mehrere Kohlenstoffatome in der Kettenmitte quartäre Kohlenstoffatome sind.

Besonders bevorzugt ist ein Gemisch aus Alkoholalkoxylaten, basierend auf 1 bis 3 verschiedenen Alkoholen ROH, besonders bevorzugt auf 1 oder 2 verschiedenen Alkoholen ROH. Dabei kann die Anzahl der Kohlenstoffatome des Rests R unterschiedlich sein und/oder die Art der Verzweigung.

Bevorzugt weist die Hauptkette der Alkohole ROH 1 bis 4 Verzweigungen auf, soweit die Kettenlänge mehr als eine Verzweigung in der Kettenmitte ermöglicht, besonders bevorzugt 1 bis 3, ganz besonders bevorzugt 2 oder 3. Diese Verzweigungen weisen im Allgemeinen unabhängig voneinander 1 bis 10 Kohlenstoffatome, bevorzugt 1 bis 6, besonders bevorzugt 1 bis 3 Besonders bevorzugte Verzweigungen sind demnach Methyl-, Ethyl-, n-Propyl- oder iso-Propyl-Gruppen.

Der Rest R des Alkohols ROH weist vorzugsweise 5 bis 30 Kohlenstoffatome auf. Da der Rest R vorzugsweise wenigstens eine Verzweigung mit mindestens einem Kohlenstoffatom aufweist, umfasst die Hauptkette 4 bis 29 Kohlenstoffatome. Bevorzugt weist der Rest R 6 bis 25 Kohlenstoffatome auf, besonders bevorzugt 10 bis 20. Das heißt, die Hauptkette weist bevorzugt 5 bis 24 Kohlenstoffatome auf, besonders bevorzugt 9 bis 19. Ganz besonders bevorzugt weist die Hauptkette 9 bis 15 Kohlenstoffatome auf und die übrigen Kohlenstoffatome des Rest R verteilen sich auf eine oder mehrere Verzweigungen.

Das mit den verzweigten Alkoholen ROH zu den eingesetzten Alkoholalkoxylaten umgesetzte Alkylenoxid ist bevorzugt ausgewählt aus der Gruppe bestehend aus Ethylenoxid, Propylenoxid und Butylenoxid. Dabei ist es auch möglich, dass ein einziger Alkohol ROH mit verschiedenen der genannten Alkylenoxide, z.B. Ethylenoxid und Propylenoxid, umgesetzt wird, wobei Alkoholalkoxylate erhalten werden können, die jeweils Blöcke aus mehreren Einheiten eines Alkylenoxids, z.B. Ethylenoxid, neben Blöcken aus mehreren Einheiten eines weiteren Alkylenoxids, z.B. Propylenoxid, aufweisen. Besonders bevorzugt enthalten die erfindungsgemäß eingesetzten Alkoholalkoxylate Ethylenoxid (EO)-Einheiten, das heißt, das eingesetzte Alkylenoxid ist bevorzugt Ethylenoxid.

Des Weiteren ist es möglich, bei der Umsetzung eines einzigen Alkohols ROH mit verschiedenen der genannten Alkylenoxide, z.B. Ethylenoxid und Propylenoxid, Alkoholalkoxylate zu erhalten, in denen der Einbau der verschiedenen Alkylenoxide statistisch erfolgt Die Einsatzmengen an Alkylenoxid betragen vorzugsweise 1 bis 25 Mol Alkylenoxid pro Mol Alkohol, bevorzugt 1 bis 20 Mol, besonders bevorzugt 3 bis 15 Mol und ganz besonders bevorzugt 5 bis 12 Mol. Bevorzugt enthält die erfindungsgemäße Zusammensetzung
- 5 bis 60 Gew.-%, insbesondere 12 bis 50 Gew.-% der Carbamoylsulfonatgruppen-haltigen Verbindung der Komponente a) und
- 0,1 bis 30 Gew.-%, insbesondere 0,5 bis 25 Gew.-% an Alkoholalkoxylat der Komponente b), jeweils bezogen auf die Zusammensetzung.

Weiterhin kann die wässrige Zusammensetzung weitere Zusatzstoffe, vorzugsweise in einer Menge von bis zu 30 Gew.-% enthalten.

Bevorzugt beträgt das Gewichtsverhältnis der Komponente a) zu b) 1:1 bis 99:1, insbesondere 5:1 bis 35:1 .

Als bevorzugte Zusatzstoffe können vorzugsweise Substanzen aus den Gruppen der synthetischen Gerbstoffe, Harzgerbstoffe, polymeren Nachgerbstoffe, vegetabilen Gerbstoffe, Fettungsmittel, Puffer oder Füllstoffe zugesetzt werden um so den Gerbprozess zu vereinfachen und die Qualität des Leders zu erhöhen.

Bei den für diesen Einsatz geeigneten synthetischen Gerbstoffen handelt es sich z. B. um wasserlösliche Kondensationsprodukte aus sulfonierten Aromaten, Formaldehyd und gegebenenfalls weiteren Substanzen aus den Gruppen der Aromaten, Harnstoff, oder Harnstoffderivaten. Bevorzugt sind hier Produkte basierend auf die Kondensation von Naphthalinsulfonsäuren, Ditolylethersulfonsäuren, Phenolsulfonsäuren, Dihydroxydiphenylsulfon und Phenol sowie Kombinationen aus diesen Rohstoffen mit Formaldehyd und gegebenenfalls Harnstoff oder Harnstoffderivaten.

Vegetabilgerstoffe sind aus pflanzlichen Quellen gewonnene Gerbstoffe aus den Klassen der kondensierten Gerbstoffe bzw. hydrolysierbaren Gerbstoffe z. B. Kastanienextrakt, Mimosa, Tara oder Quebracho.

Bei den für die Anwendung bevorzugten polymeren Nachgerbstoffen handelt es sich um hochmolekulare wasserlösliche oder in Wasser dispergierbare Produkte z. B. aus der (Ko-) Polymerisationsreaktion ungesättigter Säuren und deren Derivate mit z. B. füllender oder fettender Wirkung auf Leder. Bevorzugt sind (Co)polymerisationsprodukte der Acryl- und Methacrylsäure sowie deren Ester.

Fettungsmittel sind Substanzen basierend auf biologische, minerale oder synthethische Öle, die zur Verbesserung der Einsetzbarkeit in Wasser mit hydrophilen Gruppen versehen werden können z. B. durch vollständige oder partielle Sulfatierung, Sulfitierung, Carboxylierung oder Phosphatierung.

Als Füllstoffe kommen bevorzugt inerte anorganische Salze sowie organische Polymere in Frage, z. B. Sulfate wie Natriumsulfat oder Kalziumsulfat, Talkum, Siliziumoxid-Verbindungen, Stärke oder Ligninsulfonate.

Die erfindungsgemäßen Zusammensetzungen weisen vorzugsweise einen pH-Wert von 3 bis 7, bevorzugt von 3,3-5,5 auf. Für diesen pH-Bereich ist es vorteilhaft die Zusammensetzung durch Zugabe einer puffernden Substanz in den geeigneten pH Bereich einzustellen und zu stabilisieren. Als geeignete Puffer hierfür kommen bevorzugt Mischungen aus schwachen Säuren und Basen sowie deren Salze in Frage. Insbesonders bevorzugt sind Mischungen enthaltend monofunktionelle, bifunktionelle, polyfuntionelle oder polymere Carbonsäuren sowie deren Salze. Als Beispiele hierfür kommen im Frage Ameisensäure, Essigsäure, Oxalsäure, Milchsäure, Weinsäure, Maleinsäure, Glutarsäure, Phthalsäure und/oder Adipinsäure; trifunktionelle Carbonsäuren wie Zitronensäure oder polymere Carbonsäuren wie (co)-polymerisierte Produkte unter Verwendung von (Meth)acrylsäure, Maleinsäure oder Itakonsäure oder deren Derivate sowie die Alkali, Erdalkali und/oder Amoniumsalze dieser Verbindungen.

Die wässrigen Zusammensetzungen können beispielsweise als Lösung oder Suspension vorliegen. Eine Lösung ist bevorzugt.

In einer bevorzugten Ausführungsform der Erfindung beruhen die Carbamoylgruppen-haltigen Verbindungen auf aliphatischen Isocyanate wie Hexamethylendiisocyanat, Isophorondiisocyanat, Dicyclohexyldiisocyanat und Nonyltriisocyanat sowie Mischungen hierraus, insbesondere aber Hexamethylendiisocyanat. Es werden insbesondere 4 bis 40, bevorzugt 6 bis 25 % an Alkoholalkoxylat, bezogen auf Gesamtmenge Isocyanat zur Synthese eingesetzt.

Die Mischungen a) + b) werden in einer weiteren bevorzugten Ausführungsform pro 100 ml mit 0,5 - 20 g bevorzugt 1 - 10 g einer Mischung aus einer oder mehrerer Carbonsäuren sowie deren Salze gepuffert.

In einer weiteren bevorzugten Ausführungsform werden die gepufferten oder ungepufferten Mischungen pro 100 ml mit 5 - 30g, bevorzugt 10 - 25 g synthetischem Gerbstoff versetzt.

Die Erfindung betrifft weiterhin ein Verfahren zur Herstellung der erfindungsgemäßen wässrigen Zusammensetzungen, das dadurch gekennzeichnet ist, dass man die Komponente a) und b) mit Wasser und gegebenenfalls weiteren Zusatzstoffen mischt, insbesondere dass man Isocyanat in Gegenwart der Komponente b) in Wasser einträgt und mit Bisulfiten und/oder Disulfiten umsetzt, vorzugsweise bis alle Isocyanatgruppen abreagiert sind, und die so erhaltene Mischung enthaltend die Komponenten a) und b) gegebenenfalls mit Wasser und weiteren Zusatzstoffen mischt.

Die Umsetzung der organischen Isocyanate mit Bisulfit/Disulfit erfolgt vorzugsweise bei 0 bis 60°C, bevorzugt bei 10 bis 40°C, mit wässrigen Lösungen von Alkali- bzw. Ammoniumsulfiten und Alkoholalkoxylat bis alle NCO-Gruppen reagiert haben. Dazu sind im Allgemeinen Reaktionszeiten von 1 bis 12, vorzugsweise 3 bis 8 Stunden notwendig. Die Endprodukte sind in der Regel optisch klare wässrige Lösungen, in wenigen Einzelfällen stabile, feinteilige Emulsionen mit mittleren Teilchendurchmessern von vorzugsweise unter 8000 Nanometer.

Die Erfindung betrifft weiterhin die Verwendung der erfindungsgemäßen Zusammensetzungen als Vorgerbstoffe oder Gerbstoffe von Häuten und Fellen.

Unter Vorgerbstoff wird im Rahmen dieser Erfindung ein Produkt verstanden, mit dem eine Haut oder ein Fell in einen Zustand überführt werden kann, der handelsübliche mechanische Behandlungen wie Abwelken oder Falzen ermöglicht aber zur Fertigstellung des Leders oder Pelzes weitere Behandlungsschritte mit gerbenden Substanzen benötigt.

Die Erfindung betrifft weiterhin ein Verfahren zum Gerben von Häuten und Fellen, das dadurch gekennzeichnet ist, dass man nach Waschen, Äschern, gegebenenfalls Enthaarung und Entkalkung vorbehandelte Häute oder Felle mit der erfindungsgemäßen Zusammensetzung behandelt.

Für die Gerbung von Fellen entfällt die Enthaarung selbstverständlich.

Die entsprechend vorbereiteten Häute (nachfolgend Blößen genannt) werden vorzugsweise in einem handelsüblichen Gerbfass in wässriger Flotte bei einer Temperatur von 10°C - 60 °C und einem pH von 5-10, bevorzugt 7 - 9,5 mit 1 - 10 %, bevorzugt 2 - 6 % (Feststoff) einer Mischung gemäß Anspruch 1 in der Art behandelt, dass man ein gegerbtes Zwischenprodukt mit einer Schrumpftemperatur von > 70 °C, bevorzugt > 74 °C erhält. Bevorzugt lässt man nach Zugabe des erfindungsgemäßen Produktes das Produkt vorzugsweise 0,25 bis 8 h, bevorzugt 0,5 bis 2 h penetrieren und fixiert vorzugsweise dann das Produkt durch Zugabe eines Basifizierungsmittels. Als Basifizierungsmittel sind alle bekannten, in der Gerberei üblichen Alkali oder deren Mischungen geeignet, also z. B. Alkalicarbonate, Hydrogencarbonate, Magnesiumoxid, Dolomit, Tertiäre Amine etc, besonders aber Dolomit und Magnesiumoxid. Die Fixierung erfolgt dabei vorzugsweise über einen Zeitraum von 2 bis 24 h, bevorzugt 4 bis 12 h.

Die erhaltenen, gegerbten Zwischenprodukte eignen sich für die mechanische Weiterverarbeitung durch z. B. Abwelken, Falzen oder Spalten. Darüber hinaus zeichnen sich diese Zwischenprodukte durch eine ausgesprochen weiße, klare und lichtechte Eigenfarbe aus, die gegenüber Glutaraldehyd-gegerbten Ledern ein deutlicher Vorteil ist. Sie können mit handelsüblichen Verfahren nachgegerbt und zu weichen und luftigen Crustledern fertig gestellt werden.

Die Erfindung betrifft weiterhin einen Prozess zur Herstellung von Leder und Pelzen, dadurch gekennzeichnet, dass in wässriger Flotte bei einer Temperatur von 10°C - 60 °C und einem pH von 5-10, bevorzugt 7 - 9 vorbereitete Rohware mit 1 - 10 %, bevorzugt 2 - 6 % (Feststoff) einer Mischung gemäß Anspruch 1 in der Art behandelt wird, dass man ein gegerbtes Zwischenprodukt mit einer Schrumpftemperatur von > 70 °C, bevorzugt > 74 °C erhält.

In einer gesonderten Ausführung der Erfindung können die Eigenschaften zur mechanischen Weiterverarbeitung sowie die endgültigen Ledereigenschaften weiter verbessert werden, in dem vor, während oder nach der Zugabe des erfindungsgemäßen Produktes weitere in der Gerberei typische Stoffe der Gerbflotte zugegeben werden.

### Beispiele

### A) Herstellung erfindungsgemäßer Zusammensetzungen

### A1: Vergleichsbeispiel (analog EP-A 0 690 135, Beispiel 1)

Unter Schutzgas werden 150 g Methanol-gestartetes Polyethylenoxid (MW 500) unter vermindertem Druck bei 120 °C ausgeheizt bis kein Destillat (Wasser) mehr auftritt. Bei 100 °C wird anschließend 2 h unter Schutzgas und Ausschluß von Wasser mit 1000 g Hexamethylendiisocyanat umgesetzt. Nach Abkühlen auf Raumtemperatur wird die zähflüssige Masse unter Kühlung zu 3500 g Natriumhydrogensulfit-Lösung 39 % gerührt, die Mischung mit 1600 g Wasser auf 40 % Feststoff eingestellt und 24 h nachgerührt. Eine geringe Menge weißen Feststoffs wird abgefiltert und man erhält eine klare, farblose Lösung mit pH 5,3.

### A2: Erfindungsgemäße Umsetzung:

Zu einer Lösung aus 150 g Polyetheralkoholat (verzweigt C₁₁ mit 7 EO) in 5100 g Natriumbisulfitlösung (26,5 %) werden innerhalb von 30 min. bei Raumtemperatur 1000 g Hexamethylendiisocyanat gerührt, wobei sich die Reaktionsmischung auf ca 40 °C erwärmt. Es wird 6 h bei 20 °C nachgerührt. Man erhält eine klare, 40 %ige Lösung mit pH 5,25.

Im Folgenden sind weitere Umsetzungen tabellarisch dargestellt, die analog zu A2 durchgeführt wurden, bei denen ebenfalls klare Lösungen enthalten werden.

| Nr. | Isocyanat Typ | Menge | Polyetheralk. Typ | Menge | Konz. (%) | Reaktionstemp. (°C) |
|---|---|---|---|---|---|---|
| A3 | HDI | 1000 | v C₈ / 6 EO | 200 | 35 | 20 |
| A4 | HDI | 1000 | v C₁₂ / 8,5 EO | 150 | 40 | 20 |
| A5 | HDI | 1000 | v C₁₃ / 10 EO | 150 | 40 | 20 |
| A7 | HDI | 1000 | 1 C₁₂ / 9 EO | 400 | 30 | 20 |
| A8 | HDI | 1000 | v C₁₂/8,5 EO | 200 | 60 | 20. |
| A9 | HDI | 1000 | v C₁₃ /10 EO | 40 | 30 | 20 |
| A10 | HDI | 1000 | v C₁₃ / 10 EO | 70 | 50 | 40 |
| A13 | IPDI | 1000 | v C₁₁ / 7 EO | 200 | 35 | 30 |
| A14 | HDI/IPDI | 1000 | v C₁₁ / 7 EO | 180 | 35 | 30 |
| A16 | MDI | 1000 | v C₁₃ / 10 EO | 200 | 30 | 5 |
| A17 | HDI-Biuret | 1000 | v C₁₃ /10 EO | 200 | 40 | 30 |
| A18 | HDI-Trimer | 1000 | v C₁₂ / 8,5 EO | 170 | 40 | 20 |
| A19 | HDI | 1000 | v C₁₁ /9 EO/PO | 180 | 40 | 20 |
| A20 | HDI | 1000 | v C₁₃ / 11 EO/PO | 150 | 40 | 20 |
| HDI = Hexamethylendiisocyanat; IPDI = Isophorondiisocyanat; TDI = Toluidendiisocyanat; MDI = Methylendiphenyldiisocyanat; Mengenangaben in g; Temperaturangaben in °C; Konzentrationsangaben in % Feststoff; v C₁₂ = Verzweigtkettiger Alkohol mit im Mittel 12 C-Atomen, z. B. sogenannte Guerbet-Alkohole oder Exxal-Typen; 1 C₁₀ = linearer Alkohol mit im Mittel 10 C-Atomen; EO = Ethylenoxid; PO = Propylenoxid. | | | | | | |

Zur Stabilisation und Verbesserung der gerberischen Eigenschaften wurden in die so erhalten Produkte Puffer und/oder weitere Substanzen durch einfaches Einrühren bei Raumtemperatur eingebracht, und die Konzentration bei Bedarf durch Zugabe von Wasser eingestellt. Einige Beispiele sind in folgender Tabelle dargestellt.

| Nr. | Rohstoff | Zusatz | Menge (g) | pH | Konz. (%) | Bemerkung |
|---|---|---|---|---|---|---|
| A21 | A2 | Formiat-Puffer | 40 | 3,5 | 44 | klare Lösung |
| A22 | A4 | Lactat-Puffer | 30 | 4,0 | 43 | klare Lösung |
| A23 | A8 | Citrat-Puffer | 15 | 5,0 | 59 | klare Lösung |
| A24 | A5 | Citronensäure | 6 | 3,5 | 40 | klare Lösung |
| A25 | A3 | Polyacrylat | 50 | 4,5 | 30 | klare Lösung |
| A26 | A9 | Polymethacrylat | 300 | 6,0 | 37 | klare Lösung |
| A27 | A8 | Phosphat-Puffer | 23 | 6,8 | 40 | klare Lösung |
| A28 | A20 | Sulfatiertes Fischöl | 200 | 5,3 | 50 | milchige Lösung |
| A29 | A2 | Lecithin | 170 | 5,6 | 48 | milchige Lösung |
| A30 | A19 | Naphthalinsulfonat | 400 | 5,5 | 50 | braune Lösung |
| A31 | A8 | Aromatisches Kondensat I | 240 | 4,5 | 45 | braune Lösung |
| A32 | A3 | Tara | 330 | 4,5 | 25 | Kolloidal |
| A33 | A5 | Citronensäure + Kondensat II | 10/220 | 4,3 | 45 | braune Lösung |
| A34 | A2 | Phosphat + Sulfatiertes Klauenöl | 15/120 | 6,2 | 42 | milchige Lösung |
| Menge Rohstoff = 1000 g; Mengenangaben in g; Konzentrationen in % Feststoff; Polyacrylsäure MW ca. 5000; Polymetharylsäure Retan 540, Produkt der Rohm and Haas Corp.; Aromatisches Kondensat I basierend auf Ditolylethersulfonat, Bishydroxyphenylsulfon und Formaldehyd, TANIGAN WLF, Produkt der LANXESS Deutschland GmbH; Kondensat II basierend auf Napthtalinsulfonat, Bishydroxyphenylsulfon und Formaldehyd, TANIGAN BN, Produkt der LANXESS Deutschland GmbH. | | | | | | |

### B) Gerbungen

Prozentangaben beziehen sich auf das Gewicht der eingesetzten Rohware/Zwischenprodukte.

### B1: medizinisches Schafsfell, chromfrei

In einer betriebsüblichen Haspel werden luftgetrocknete Schafsfelle mit 20 1 Wasser pro Fell und 2,0 g/l Nonylphenolethoxylat bei 25 °C über Nacht rückgeweicht und anschließend entfleischt. Die so vorbereiteten Felle werden bei 35 °C zweimal in wässriger Flotte mit 2,0 g/l Nonylphenolethoxylat für jeweils 60 min. entfettet und nach Ablassen der Flotte mit warmem Wasser gründlich gespült. Zur Vorbereitung der Gerbung wird neue Flotte vorgelegt und ohne Pickel bei 25 °C mit 14 - 16 g/l erfindungsgemäßem Produkt A23 versetzt. Durch Zugabe von Magnesiumoxid in drei Dosen wird der pH schrittweise auf 8,8 erhöht und dann die Temperatur auf 40 °C angehoben. Nach 12 h Laufzeit werden ins gleiche Bad 7 g/l sulfatiertes synthetisches Fettungsmittel und 2,0g/l Lecithin-basiertes Dispergierhilfsmittel gegeben. Nach 2 h wird mit Ameisensäure der pH auf 5,5 reduziert. Nach Ablassen der Flotte wird mit kaltem Wasser gründlich nachgewaschen und die Felle handelsüblich fertig gestellt und weisen eine Schrumpftemperatur von 77 °C auf.

Gegenüber handelsüblich mit Glutardialdehyd gegerbten Fellen weisen die erfindungsgemäßen Felle eine deutlich hellere Farbe sowohl des Leders wie auch der Wolle und eine bessere Lichtechtheit auf. Im Aldehyd-Test DIN 53315 A sind die Messwerte gegenüber dem Stand der Technik deutlich reduziert und liegen unter der Nachweisgrenze der Methode von 20 ppm.

B2: "Wet White" für vollnarbiges Automobil und Möbelleder, Modellprozess.

Gesalzene Rindshäute werden handelsüblich gewaschen, geäschert, enthaart, entfleischt, und gespalten. Zur Entkälkung wird in 100 % Flotte bei 25 °C 0,3 % Natriumbisulfit, 2,5 % Ammoniumsulfat sowie 0,2 % Fettalkoholethoxylat-basiertes Entfettungsmittel gegeben und im Fass für 1 h bewegt. Bei pH 8,8 wird 1 % eines Beizenzyms zugegeben, für weitere 2 h bewegt und die Flotte anschließend abgelassen.

In 50 % frischer Flotte wird die Blöße mit 4 % (Feststoff) des Erfindungsgemäßen Produktes A2 versetzt. Nach 2 h Penetrationszeit wird durch Zugabe von 1,2 % Magnesiumoxid in drei Raten der pH auf 9,0 angehoben und das Leder anschließend bei 40 °C über Nacht bewegt. Zur Vorbereitung der Nachgerbung wird mit Ameisensäure der pH auf 5,0 reduziert, 2,0 % Naphthalinsulfonat für 1 h einwirken lassen, die Flotte abgelassen und die Wet-White-Leder abgewelkt. Die Schrumpftemperatur wird gemessen und die Leder gefalzt.

Analog werden weitere Versuche zur Beurteilung der Qualität der Gerbung durchgeführt. Einige der Ergebnisse sind in der folgenden Tabelle zusammengefasst:

| Produkt | Tg (°C) | Griff | Abwelkbarkeit | Falzbarkeit |
|---|---|---|---|---|
| A1 (Vergleich) | 74 | leicht fettig | akzeptabel | akzeptabel |
| A2 | 76 | trocken | gut | gut |
| A4 | 76 | trocken | gut | gut |
| A5 | 75 | trocken | gut | gut |
| A9 | 78 | trocken | gut | gut |
| A24 | 76 | trocken | gut | gut |
| A26 | 80 | trocken, fester | sehr gut | sehr gut |
| A33 | 78 | trocken, fester | sehr gut | sehr gut |
| Tg = Schrumpftemperatur in °C; Wet White: Chromfrei gegerbtes Leder-Zwischenprodukt zur mechanischen Behandlung und weiteren (Nach-)Gerbung. | | | | |

### B3: Chromfrei gegerbtes Möbelleder:

Wie in B2 vorbereitete Blöße wird in 50 % Flotte mit 5,5 % (Feststoff) des erfindungsgemäßen Produktes A28 versetzt. Nach 2 h Penetrationszeit wird durch Zugabe von 2 % einer Mischung aus Magnesiumoxid, Natriumformiat und Kalziumcarbonat der pH auf 8,8 angehoben und das Leder anschließend bei 40 °C über Nacht bewegt. Zur Vorbereitung der Nachgerbung wird mit Ameisensäure der pH auf 6,0 reduziert, die Flotte abgelassen und die Wet-White-Leder abgewelkt. Die Schrumpftemperatur wird gemessen (76 °C) und die Leder auf 0,9 mm Stärke gefalzt.

Die gefalzten Wet-White-Leder werden bei 30 °C in 100 % Flotte für 30 Min. mit 3 % Naphthalinsulfonsäurekondensat behandelt bevor als Vorfettung 3 % sulfatiertes Fischöl und 3 % synthetisches Fettungsmittel zugegeben werden. Nach 30 Min. Laufzeit wird mit 24 % einer Mischung aus Tara, Mimosa und einem synthetischen Gerbstoff basierend auf ein Naphthalinsulfonsäure-Sulfon-Kondensat innerhalb von 2 h ausgegerbt und mit 3 % Farbstoff gefärbt. Nach Aufflotten mit 100 % Wasser von 45 °C werden weitere 3 % sulfatiertes Fischöl sowie 2 % synthetisches Fettungsmittel zugegeben und am nächsten Morgen durch Zugabe von 1 % Ameisensäure fixiert.

In frischer Flotte (100 %) wird bei 45 °C mit 7 % sulfatiertem Fischöl und 3 % synthetischem Fettungsmittel eine Top-Fettung durchgeführt , diese mit 1 % Ameisensäure fixiert und nach Aufflotten mit 200 % Wasser mit 1 % Farbstoff überfärbt. Nach Fixerung mit 0,5 % Ameisensäure wird abgelassen, gewaschen und das Leder handelsüblch fertiggestellt.

Man erhält sehr weiche und trotzdem festnarbige, egal gefärbte Crustleder mit einem sehr gleichmäßigen Millkorn, die sich ausgezeichnet zurichten lassen.

## Patentansprüche

1. Wässrige Zusammensetzung enthaltend
a) wenigstens eine Carbamoylsulfonatgruppen-haltige Verbindung und
b) wenigstens ein Alkoholalkoxylat.

2. Wässrige Zusammensetzung nach Anspruch 1, **dadurch gekennzeichnet, dass** als Carbamoylsulfonatgruppen-haltigen Verbindungen der Komponente a) Umsetzungsprodukte aus organischen Isocyanaten und Bisulfit und/oder Disulfit eingesetzt werden.

3. Wässrige Zusammensetzung nach wenigstens einem der Ansprüche 1 oder 2, enthaltend
- 5 bis 60 Gew.-%, insbesondere 12 bis 50 Gew.-% der Carbamoylsulfonatgruppen-haltigen Verbindung der Komponente a) und
- 0,1 bis 30 Gew.-%, insbesondere 0,5 bis 25 Gew.-% an Alkoholalkoxylat der Komponente b), jeweils bezogen auf die Zusammensetzung.

4. Wässrige Zusammensetzung nach wenigstens einer der Ansprüche 2 oder 3, **dadurch gekennzeichnet, dass** das organische Isocyanat ein Isocyanat mit einer Funktionalität von 1,8 bis 3,5 ist und vorzugsweise ein Molgewicht von < 800 g/mol besitzt, insbesondere ein Isocyanat mit Funktionalität von 2 und einem Molgewicht < 400 g/mol ist.

5. Wässrige Zusammensetzung nach wenigstens einem der Ansprüche 2 bis 4, **dadurch gekennzeichnet, dass** das organische Isocyanat ein aliphatisches Isocyanat ist insbesondere Dicyclohexyldiisocyanat, Isophorondiisocyanat, Nonyltriisocyanat oder Hexamethylendiisocyanat, besonders bevorzugt Hexamethylendiisocyanat.

6. Wässrige Zusammensetzung nach wenigstens einem der Ansprüche 1 bis 5, **dadurch gekennzeichnet, dass** es sich bei dem Alkanolalkoxylat um das Umsetzungsprodukt mindestens eines Alkohols mit n Mol mindestens eines Alkylenoxids handelt, wobei das Alkylenoxid bevorzugt 2- 6 Kohlenstoffatome aufweist, besonders bevorzugt aus der Gruppe Ethylenoxid und Propylenoxid stammt und n 3 - 25, bevorzugt 6-15 bedeutet.

7. Wässrige Zusammensetzung nach Anspruch 6, **dadurch gekennzeichnet, dass** es sich bei dem Alkohol um eine Verbindung mit 5 - 30 Kohlenstoffatomen handelt, bevorzugt um eine verzweigtkettige Verbindung mit 4 - 29 Kohlenstoffatomen im längsten Alkylrest sowie mindestens einer Verzweigung C₁ bis C₁₀ im Bereich C#2 bis C#ω-2 ist wobei C#1 für das erste und C#ω für das letzte Kohlenstoffatom der längsten Kette steht.

8. Wässrige Zusammensetzung nach wenigstens einem der Ansprüche 1 bis 7, **dadurch gekennzeichnet, dass** als weitere Zusatzstoffe Produkte aus den Gruppen der synthetischen Gerbstoffe, Harzgerbstoffe, polymeren Nachgerbstoffe, vegetabilen Gerbstoffe, Fettungsmittel, Füllstoffe und/oder Puffersubstanzen enthalten sind.

9. Wässrige Zusammensetzung nach wenigstens einem der Ansprüche 1 bis 8, **dadurch gekennzeichnet, dass** sie Puffer aus der Gruppe der monofunktionellen, bifunktionellen, polyfunktionellen oder polymeren Carbonsäuren sowie deren Salze enthält.

10. Verfahren zur Herstellung von wässrigen Zusammensetzung nach wenigstens einem der Ansprüche 1 bis 9, **dadurch gekennzeichnet, dass** man wässrigen Lösung aus Alkanolalkoxylat und Bisulfit und/oder Disulfit bei einer Temperatur von 0 - 70 °C, bevorzugt 1 - 40 °C, mit wenigstens einem organischem Isocyanat umsetzt, bis kein freies Isocyanat mehr nachgewiesen werden kann, und gegebenenfalls weitere Zusatzstoffe zugibt.

11. Verfahren zur Herstellung von den erfindungsgemäße wässrigen Zusammensetzungen, das **dadurch gekennzeichnet ist, dass** man die Komponente a) und b) mit Wasser und gegebenenfalls weiteren Zusatzstoffen mischt.

12. Verwendung von wässrigen Zusammensetzungen nach wenigstens einem der Ansprüche 1 bis 9 als Vorgerbstoffe oder Gerbstoffe von Häuten und Fellen.

13. Verfahren zum Gerben von Häuten oder Fellen, **dadurch gekennzeichnet, dass** man durch Waschen, Äschern, gegebenenfalls Enthaarung und Entkälken vorbehandelten Häute oder Fellen mit der wässrigen Zusammensetzung nach wenigstens einem der Ansprüche 1 bis 9 behandelt.

14. Leder und Pelze hergestellt unter Verwendung einer Zusammensetzung gemäß Anspruch 1.

15. Prozess zur Herstellung von Leder und Pelzen **dadurch gekennzeichnet, dass** in wässriger Flotte bei einer Temperatur von 10 °C - 60 °C und einem pH von 5-10, bevorzugt 7 - 9 vorbereitete Rohware mit 1 10 %, bevorzugt 2 - 6 % (Feststoff) einer Mischung gemäß Anspruch 1 in der Art behandelt wird, dass man ein gegerbtes Zwischenprodukt mit einer Schrumpftemperatur von > 70 °C, bevorzugt > 74 °C erhält.
